# EUROPÄISCHE PATENTSCHRIFT

(11) **EP 3 120 431 B1**
(45) Veröffentlichungstag und Bekanntmachung des Hinweises auf die Patenterteilung: **15.04.2020**
(21) Anmeldenummer: 15711052.9
(22) Anmeldetag: 16.03.2015
(51) Int. Cl.: H02G 3/04, H02G 11/00

(54) **MEDIENVERSORGUNGSVORRICHTUNG**
MEDIA SUPPLY DEVICE
DISPOSITIF D'ALIMENTATION DE MILIEUX

(30) Priorität: 17.03.2014 DE 102014103620
(43) Veröffentlichungstag der Anmeldung: 25.01.2017
(73) Patentinhaber: Waldner Laboreinrichtungen GmbH & Co. KG, 88239 Wangen (DE)
(72) Erfinder: LIEBSCH, Jürgen, 88161 Lindenberg (DE)
(74) Vertreter: Kotitschke, Ralf Thomas
(86) Internationale Anmeldenummer: PCT/EP2015/025014
(87) Internationale Veröffentlichungsnummer: WO 2015/139849

(56) Entgegenhaltungen:
- EP-A2- 2 367 248
- WO-A1-2012/013496
- DE-A1- 3 408 298
- DE-A1- 4 430 533
- DE-A1- 19 905 336
- DE-U1- 20 318 044

## Beschreibung

Die vorliegende Erfindung betrifft eine Medienversorgungsvorrichtung zur barrierefreien, punktuellen Versorgung von mindestens einem Schul- oder Laborarbeitsplatz mit Labormedien, die einen Korpus und eine Vielzahl von relativ zu dem Korpus höhenverstellbare und mit diesem gekoppelte Armaturen zur Ver- und Entsorgung von Labormedien umfasst.

Die Anforderungen an moderne Laborräume sind in den letzten Jahren signifikant gestiegen und werden heutzutage u.a. durch folgende Faktoren bestimmt: Barrierefreiheit, Flexibilität der Medienversorgung, Modularität, Anpassbarkeit an veränderte Aufgabenstellungen und Geräteausstattung, und geringe Bereitstellungskosten durch effiziente Ausnutzung der Raumhöhe und der Laborfläche. Bedingt durch diese Faktoren, die nicht abschließend zu verstehen sind, sind Konzepte entwickelt worden, welche die Versorgung der Laborarbeitsplätze mit Labormedien ohne Bodenanschlüsse von oben ermöglichen. Eine Versorgung von oben über die Decke hat zahlreiche Vorteile. So bleibt zum einen der Bodenbereich des Laborraums frei von Medienanschlüssen, und dadurch bedingt können zur Optimierung von Arbeitsabläufen die Laborarbeitsplätze, und die sonstigen im Labor normalerweise benötigten Einrichtungsgegenstände jederzeit örtlich verändert werden. Zum anderen erlaubt eine Medienversorgung über die Decke auch eine einfache, nachträgliche Anpassung des Laborlayouts an veränderte Laborbedingungen, wenn z.B. ein anorganisches Labor zu einem biochemischen oder physikalischen Labor verändert werden soll. All dies ist ohne nennenswerten Eingriff in den Laborraum und das Laborgebäude möglich.

Hinsichtlich der Entnahme der von oben über die Decke bereitgestellten Labormedien unterscheidet man grundsätzlich zwischen zwei Systemen.

Zum einen gibt es trassenförmige Medienversorgungssysteme, die zum Beispiel auch als Medienflügel bezeichnet werden, und die die Medienversorgung von linear entlang der Trasse angeordneten Laborarbeitsplätzen erlauben. Zur zweiten Kategorie gehören punktuelle Versorgungssysteme. Solche Systeme versorgen lediglich einen Arbeitsplatz oder eine Gruppe von z.B. 2 oder 3 benachbarten Arbeitsplätzen, die räumlich eng begrenzt sind, mit Labormedien. Es gibt aber auch Kombinationen aus trassenförmigen und punktuellen Medienversorgungssystemen. Bei der vorliegenden Erfindung handelt es sich um punktuelle Versorgungssysteme.

Allgemein bekannt sind punktuelle Versorgungssysteme, die an der Geschossdecke oder eventuell einer abgehängten Decke befestigt sind. Solche punktuellen Versorgungssysteme weisen Entnahmearmaturen auf, die entweder in einer festgelegten Höhe sich unterhalb der Decke befinden (z.B. Mediensäulen) oder deren Entnahmearmaturen in der Höhe verstellbar sind. Bei den aus dem Stand der Technik bekannten höhenverstellbaren Systemen erfolgt eine Absenkung der Medienarmaturen auf unterschiedliche Weise. So gibt es Systeme, die über ein Scherengestänge, eine Teleskopführung oder ein Gelenk, das eine Schwenkbewegung um eine horizontale Achse gestattet, die Medienanschlüsse absenkt und bei Nichtbedarf wieder anhebt. In diesem Zusammenhang wird auf DE 199 05 336 A1, DE 203 18 044 U1, WO 2012/013496 A1, DE 44 30 533 A1, EP 2 367 248 A3 und EP 1 916 749 B1 verwiesen. In Arztpraxen und klinischen Räumen, wie zum Beispiel einem Operationssaal, kommen Systeme zum Einsatz, die über gelenkig miteinander verbundene Arme verfügen und so vertikal und horizontal verschwenkt werden können. Im Bereich des freien Endes dieser Gelenksarme befinden sich häufig Monitore, Ablagen, aber auch elektrische und EDV-Anschlüsse. Auch die meist in Zahnarztpraxen anzutreffenden Leuchten über dem Zahnarztstuhl sind über eine derartige Anordnung von Gelenkarmen in nahezu jede Position über dem Zahnarztstuhl bewegbar.

DE 34 08 298 A1 beschreibt eine Einrichtung zur Versorgung eines räumlich begrenzten Bereichs mit Energie, Medien und Daten. Diese Einrichtung ist würfelförmig aufgebaut, an dem Armaturen vorgesehen sind, an die Zuleitungen zur Entnahme der verschiedenen Medien angeschlossen werden können. Der Würfel wird über eine Kette an der Decke aufgehängt.

Aus EP 2 367 248 A2 ist eine Medienversorgungsvorrichtung bekannt, die von einer horizontalen Parkposition unmittelbar unterhalb einer Decke in eine vertikale Arbeitsposition verschwenkt werden kann. Das freie Ende der verschwenkbaren Medienversorgungsvorrichtung weist eine Vielzahl von Armaturen auf.

Die vorliegende Erfindung stellt nun eine Alternative zu den aus dem Stand der Technik bekannten punktuellen Medienversorgungssystemen dar. Dies wird durch die vorliegende Erfindung mit der Merkmalskombination des Patentanspruches 1 erreicht. Optionale bzw. bevorzugte Merkmale der Erfindung sind in den abhängigen Patentansprüchen 2 bis 17 angegeben.

Erfindungsgemäß wird eine Medienversorgungsvorrichtung zur barrierefreien, punktuellen Versorgung von mindestens einem Schul- oder Laborarbeitsplatz mit Labormedien bereitgestellt. Die Medienversorgungsvorrichtung umfasst dabei einen Korpus und eine Vielzahl von relativ zu dem Korpus höhenverstellbare und mit diesem gekoppelte Armaturen zur Ver- und Entsorgung von Labormedien. Die Kopplung zwischen den Armaturen und dem Korpus ist derart, dass die Armaturen um mindestens eine von einer horizontalen und vertikalen Drehachse abweichende schiefliegende Drehachse drehbeweglich sind. Sie ist dadurch gekennzeichnet, dass die Armaturen zugentlastet mit dem Korpus gekoppelt sind.

Gemäß einer bevorzugten Ausführungsform der Erfindung sind die Armaturen um mindestens eine horizontale, mindestens eine vertikale und eine Vielzahl von schiefliegenden Drehachsen drehbeweglich.

Vorzugsweise sind die Armaturen nach Art einer Rüsselbewegung bewegbar.

Gemäß einer vorteilhaften Weiterbildung der Erfindung sind die Armaturen relativ zum Korpus in eine Vielzahl von vorbestimmten Höhenlagen verstellbar.

Bevorzugt sind die Armaturen relativ zum Korpus stufenlos höhenverstellbar.

Weiterhin bevorzugt ist die Drehbeweglichkeit der Armaturen in jeder Höhenlage möglich.

Weiterhin vorteilhaft sind die Armaturen in einem Gehäuse aufgenommen, das mit dem Korpus gekoppelt ist.

Noch vorteilhafter ist es, wenn der Korpus eine Vertiefung aufweist, in die das Gehäuse zumindest teilweise aufnehmbar ist.

Vorzugsweise sind das Gehäuse und der Korpus durch eine Vielzahl von ringförmigen Elementen gekoppelt, wobei benachbarte ringförmige Elemente drehbeweglich miteinander verbunden sind.

Bevorzugt wird die Drehbeweglichkeit benachbarter ringförmiger Elemente durch ein Kugel-Pfannen-Gelenk erreicht.

Noch bevorzugter bildet die Vielzahl von ringförmigen Elementen einen geschlossenen Mantel.

Gemäß einer vorteilhaften Weiterbildung der Erfindung sind die Armaturen fluidmäßig und/oder elektrisch mit Labormedienleitungen verbunden, welche innerhalb der Vielzahl von ringförmigen Elementen verlaufen.

Gemäß einer weiteren bevorzugten Ausführungsform der Erfindung weist der Korpus eine Öffnung auf, durch die zumindest ein Teil der Vielzahl von ringförmigen Elementen bewegbar ist.

Weiterhin bevorzugt ist in dem Korpus eine Kette aufgenommen, die an ein ringförmiges Element angeflanscht ist, und durch eine horizontale Bewegung der Kette können die Armaturen in der Höhe verstellt werden.

Vorteilhaft ist es, wenn die Medienversorgungsvorrichtung des Weiteren einen Kraftaufnehmer umfasst, der eine auf die Armaturen wirkende Kraft erfasst, wobei in dem Fall, dass die erfasste Kraft einen vorbestimmten Schwellenwert überschreitet, die Labormedienzufuhr zu den Armaturen unterbrochen wird.

Besonders vorteilhaft ist der Korpus zur Anbringung an eine Raumdecke oder eine Raumwand ausgebildet.

Noch bevorzugter umfassen die Armaturen mindestens zwei, vorzugsweise drei oder vier oder fünf oder sechs oder sieben oder acht oder neun oder zehn Labormedienarmaturen, die ausgewählt sind aus der Gruppe bestehend aus Gas-, Reinstgas-, Wasser-, Druckluft-, Strom-, EDV-, Multimedia-, Licht-, Vakuum und Abluftarmaturen.

Die Erfindung wird nun rein beispielhaft anhand der Fig. 1 bis Fig. 4 erläutert, die eine bevorzugte Ausführungsform der Erfindung darstellen. Von den Figuren zeigen:
Fig. 1 eine Seitenansicht einer Medienversorgungsvorrichtung, bei der die Armaturen zur Ver- und Entsorgung von Labormedien in einer eingefahrenen Stellung dargestellt sind,
Fig. 2 eine Seitenansicht der in Fig. 1 gezeigten Medienversorgungsvorrichtung, bei der die Armaturen in einer ausgefahrenen Stellung angeordnet sind,
Fig. 3 eine Draufsicht auf die in den Fig. 1 und 2 gezeigte Medienversorgungsvorrichtung, und
Fig. 4 eine Unteransicht der Armaturen.

Da es keine allgemein gültige bzw. offizielle Definition des Begriffes "Labormedien" gibt, werden im Sinne der Erfindung unter Labormedien sämtliche Medien verstanden, die in einem Labor, aber auch in einem naturwissenschaftlichen oder hauswirtschaftlichen Unterrichtsraum einer Schule benötigt und zugeführt werden. Zu diesen Labormedien zählen nicht nur gasförmige oder flüssige Stoffe, sondern auch solche, die elektrischer Natur sind. Dazu zählen beispielsweise Strom und in elektrischer Form vorliegende Daten in analoger oder digitaler Form. Aber nicht nur Labormedien, die einem Labor- oder Schularbeitsplatz zugeführt werden, sollen im Sinne der Erfindung zu den Labormedien zählen. Vielmehr sollen unter dem Begriff "Labormedien" auch solche verstanden werden, die von einem Labor- oder Schularbeitsplatz abgeführt werden müssen, so zum Beispiel Abwasser und Abluft.

Wie bereits im einleitenden Teil der Beschreibung erwähnt, soll der Begriff "punktuell" eine Abgrenzung zu trassenförmigen Medienversorgungssystemen schaffen. Aber auch flächendeckende Medienversorgungssysteme, wie z.B. die Mediendecke, die eine Verteilung der Labormedien von einem gebäudeseitigen Bereitstellungspunkt über die gesamte Laborraumfläche und flächendeckend verteilte Entnahmestellen für die Labormedien im Bereich der Decke vorsehen, sind von punktuellen Medienversorgungssystemen zu unterscheiden. Der Begriff "punktuell" soll nicht im mathematischen Sinne verstanden werden, denn eine punktuelle Versorgung hat in der makroskopischen Welt natürlich stets eine flächenmäßig begrenzte Ausdehnung. Durch ein punktuell wirkendes Versorgungssystem soll ein Arbeitsplatz oder räumlich eng benachbarte Arbeitsplätze mit Labormedien versorgt werden.

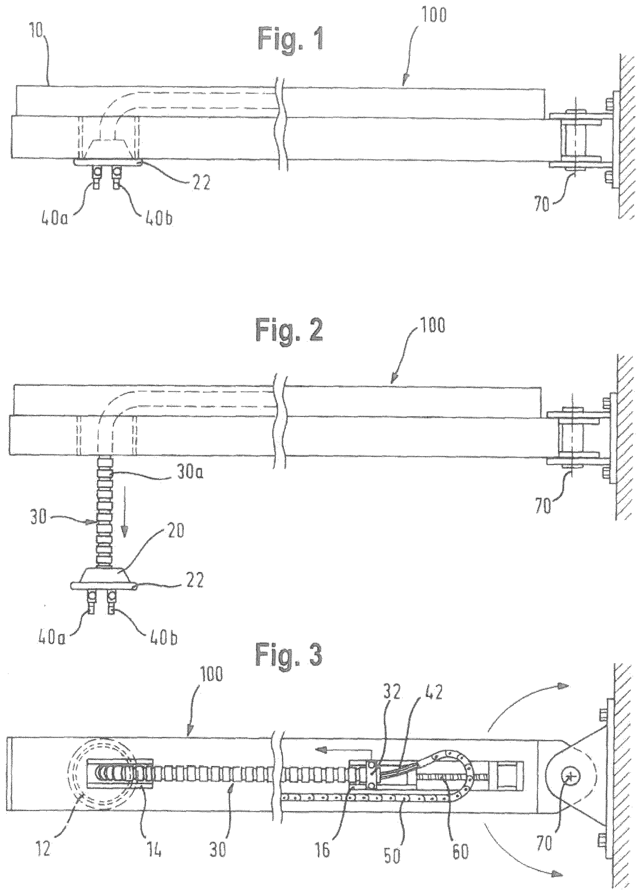

Die in den Figuren gezeigte Medienversorgungsvorrichtung 100 dient vornehmlich der barrierefreien, punktuellen Versorgung von mindestens einem Schul- oder Laborarbeitsplatz mit Labormedien. Die Medienversorgungsvorrichtung 100 wird zu diesem Zweck entweder an einer Raumwand (wie in Fig. 1) oder einer Raumdecke, sei es eine Geschossdecke oder eine abgehängte Decke, befestigt. Bei der Befestigung der Medienversorgungsvorrichtung an einer Raumdecke wird sie vorzugsweise mittels einer entsprechend ausgebildeten Aufhängung befestigt. Diese Befestigung kann auch ein in Fig. 1 dargestelltes Gelenk 70 umfassen, das eine Drehbewegung in einer horizontalen Ebene gestattet. Durch diese Drehbewegung wird die Reichweite der Medienversorgungsvorrichtung in horizontaler Richtung vergrößert im Vergleich zu einer starren, unbeweglichen Befestigung an der Raumwand oder der Raumdecke.

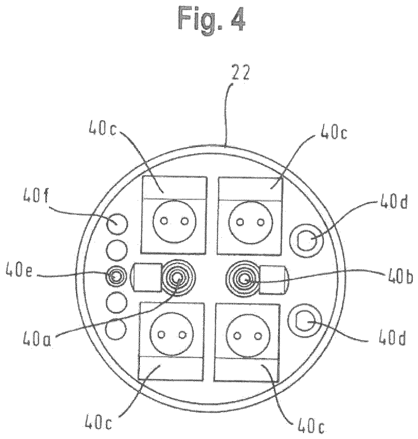

Wie in Fig. 4 zu sehen ist, weist die Medienversorgungsvorrichtung 100 eine Vielzahl von Armaturen 40a-40f für verschiedene Labormedien auf, die bei dem hier gezeigten Ausführungsbeispiel in einem schalenförmigen Gehäuse 20 mit kreisrundem Querschnitt aufgenommen sind. Bei dem gezeigten Ausführungsbeispiel sind insgesamt vier Steckdosen 40c vorgesehen, von denen jeweils zwei Steckdosen in einer Reihe angeordnet sind. Bei den Steckdosen kann es sich um solche für Niederspannung (z.B. in Deutschland 230V und 400V) handeln. Zwischen den Steckdosen 40c sind bei dem gezeigten Ausführungsbeispiel Armaturen 40a, 40b für gasförmige und wässrige Medien angeordnet, die jeweils über einen Absperrhahn verfügen, so dass die Gas- und Wasserzufuhr manuell begonnen und beendet werden kann. Darüber hinaus sind zwei Netzwerkanschlüsse 40d, die im Sinne der Erfindung auch als Armaturen verstanden werden, rechts in Fig. 4 dargestellt. Auf der linken Seite in Fig. 4 sind weitere Anschlüsse 40e, 40f zu sehen, beispielsweise zur Bereitstellung von Licht, Druckluft und Vakuum. An dieser Stelle sei ausdrücklich bemerkt, dass die Erfindung nicht auf die in Fig. 4 gezeigte Anordnung von Armaturen und die hier explizit genannte Art der Armaturen beschränkt ist. Vielmehr können Armaturen jeglicher Art und vorzugsweise modular vorgesehen sein, die für die Ver- und Entsorgung der weiter oben näher beschriebenen Labormedien zweckdienlich sind.

In Bezug auf Fig. 2 ist das schalenförmige Gehäuse 20 mit einem raupenähnlichen, schlauchförmigen Element 30 verbunden, das eine Vielzahl von ringförmigen Elementen 30a umfasst. Bei dem Schlauch 30 handelt es sich um eine schlauchförmige Anordnung aus einer Vielzahl von ringförmigen Elementen 30a, die jeweils eine konvexe Oberfläche aufweisen und vorzugsweise über ein nicht gezeigtes Kugel-Pfannen-Gelenk untereinander verbunden sind.

Dadurch ist der Schlauch 30 in jeder ausgefahrenen Stellung, das heißt in jeder Höhenlage außerhalb des Korpus 10 dreidimensional ähnlich einem Rüssel bewegbar. Mit anderen Worten, der Schlauchrüssel 30 ist nicht nur um horizontale und vertikale Achsen drehbeweglich, sondern auch um schiefliegende Drehachsen, auch solche, die sich mit der Bewegung örtlich variabel verändern. Eine derartige dreidimensionale freie Beweglichkeit des Rüssels 30 bietet eine maximale Flexibilität in Bezug auf Erreichbarkeit und Handhabung der Medienversorgungsvorrichtung 100.

Das in Fig. 2 gezeigte unterste ringförmige Element 30a ist mit dem Gehäuse 20 verbunden, während das am gegenüberliegenden freien Ende des schlauchförmigen Elements 30 angeordnete ringförmige Element 30a an einer Kette 50 angeflanscht ist. Die Labormedienleitungen 42, die mit den Armaturen 40a-40f fluidmäßig verbunden sind, verlaufen innerhalb des raupenähnlichen Schlauchs 30 und innerhalb der Kette 50, die auch als Energiekette bezeichnet wird, und können mit gebäudeseitigen Bereitstellungsanschlüssen oder den Medienübergabepunkten einer Mediendecke verbunden werden.

Der Korpus 10 weist eine Vertiefung auf, in die das schalenförmige Gehäuse 20 zumindest teilweise einfahrbar bzw. aufnehmbar ist. Vorzugsweise befindet sich am unteren Rand des schalenförmigen Gehäuses 20 ein Gummiring 22, der im eingefahrenen Zustand leicht komprimiert wird, und so für eine feste Fixierung des Gehäuses 20 in der Vertiefung sorgt. Der Gummiring 22 dient in jeder ausgefahrenen Stellung des Schlauchs 30 auch als Schutz vor Kopfverletzungen bei ungewollter Berührung einer Person mit dem Gehäuse 20.

Innerhalb des in Fig. 1 und Fig. 2 gezeigten Korpus 10, der vorzugsweise eine rechteckige Querschnittsform aufweist, findet eine Umlenkung des raupenähnlichen Schlauchs 30, der vorzugsweise eine geschlossene Mantelfläche bildet, statt. Im Bereich der Umlenkung weist der Korpus 10 vorzugsweise eine konvexe Oberfläche auf, um ein möglichst gleichmäßiges (und ruckelfreies) Anheben und Absenken des Schlauchs 30 zusammen mit dem Gehäuse 20 und den darin befindlichen Armaturen 40a-40f durch die an der Unterseite des Korpus 10 vorgesehene Öffnung 12 zu gewährleisten. Beispielsweise kann ein elektromotorisch angetriebener Spindelantrieb 60 für eine translatorische Bewegung des Abschnittes des Schlauchs 30, der im Inneren des Korpus 10 verläuft, sorgen. Als Antrieb für das Absenken und Anheben des Schlauchs 30 kann vorzugsweise auch ein pneumatischer Hubzylinder verwendet werden. Um ein möglichst geradliniges Herablassen des Schlauchs 30 zu ermöglichen, weist der Korpus 10 im Bereich des Umlenkpunktes eine Führung 14 auf, die aus parallel zueinander beabstandeten, vertikal ausgerichteten Platten ausgebildet ist.

Die Medienversorgungsvorrichtung 100 verfügt vorzugsweise auch über einen Vandalismusschutz. Wird beispielsweise eine Kraft auf das Gehäuse 20 oder den schlauchförmigen Rüssel 30 ausgeübt, die über einem vorbestimmten Schwellenwert liegt, erfasst und misst ein in den Zeichnungen nicht dargestellter Kraftaufnehmer diese Kraft und veranlasst über eine zwischengeschaltete Steuerung, dass sämtliche Armaturen 40a-40f deaktiviert werden. Im deaktivierten Zustand sind beispielsweise die Steckdosen 40c oder andere elektrische Armaturen 40d, 40e, 40f spannungslos, und sämtliche Armaturen 40a, 40b für gas- und flüssige Labormedien geschlossen. Im deaktivierten Zustand findet somit keine Ver- und/oder Entsorgung von Labormedien über die Medienversorgungsvorrichtung 100 statt.

Von Bedeutung ist auch, dass durch die Kopplung des Gehäuses 20 über den raupenförmigen oder rüsselähnlichen Schlauch 30 mit dem Korpus 10 eine Zugentlastung sämtlicher innerhalb des Schlauchs 30 verlaufender Medienleitungen 42 gewährleistet wird. Dieser Schlauch 30, dessen Mantel vorzugsweise geschlossen ist, führt, schützt und trägt somit sämtliche darin verlaufenden Medienleitungen 42.

Bei dem hier gezeigten bevorzugten Ausführungsbeispiel beträgt die Länge, die das Gehäuse 20 und somit die Armaturen 40a-40f relativ zum Korpus 10 abgesenkt werden können, ca. 400 mm. Damit können die Armaturen 40a-40f auf eine Arbeitshöhe von ca. 1,50 m über dem Boden abgesenkt und auch von kleinwüchsigen Personen leicht erreicht werden. Die Länge des Korpus 10, bei dem hier gezeigten Ausführungsbeispiel die in horizontaler Richtung sich erstreckende Länge, beträgt vorzugsweise 1,50 m.

Die Entnahme der Medien ist vorzugsweise in jeder Höhenlage möglich. Ebenso kann vorzugsweise die Abwärts- und Aufwärtsbewegung des Medienrüssels 30 in jeder Höhenlage beendet und wieder gestartet werden. Allerdings ist eine Medienentnahme während der Bewegung des Medienrüssels 30 aus Sicherheitsgründen vorzugsweise nicht möglich.

Dafür sorgt auch die bereits im Zusammenhang mit dem Kraftaufnehmer erwähnte Steuerung, die in den Figuren nicht explizit dargestellt ist.

## Patentansprüche

1. Medienversorgungsvorrichtung (100) zur barrierefreien, punktuellen Versorgung von mindestens einem Schul- oder Laborarbeitsplatz mit Labormedien, die einen Korpus (10) und eine Vielzahl von relativ zu dem Korpus (10) höhenverstellbare und mit diesem gekoppelte Armaturen (40a-40f) zur Ver- und Entsorgung von Labormedien umfasst, wobei die Kopplung zwischen den Armaturen (40a-40f) und dem Korpus (10) derart ist, dass die Armaturen (40a-40f) um mindestens eine von einer horizontalen und vertikalen Drehachse abweichende schiefliegende Drehachse drehbeweglich sind, wobei die Armaturen (40a-40f) zugentlastet mit dem Korpus (10) gekoppelt sind.

2. Medienversorgungsvorrichtung (100) nach Anspruch 1, **dadurch gekennzeichnet, dass** das die Armaturen (40a-40f) um mindestens eine horizontale, mindestens eine vertikale und eine Vielzahl von schiefliegenden Drehachsen drehbeweglich sind.

3. Medienversorgungsvorrichtung (100) nach Anspruch 1 oder 2, **dadurch gekennzeichnet, dass** die Armaturen (40a-40f) nach Art einer Rüsselbewegung bewegbar sind.

4. Medienversorgungsvorrichtung (100) nach einem der vorhergehenden Ansprüche, **dadurch gekennzeichnet, dass** die Armaturen (40a-40f) relativ zum Korpus (10) in eine Vielzahl von vorbestimmten Höhenlagen verstellbar sind.

5. Medienversorgungsvorrichtung (100) nach einem der vorhergehenden Ansprüche, **dadurch gekennzeichnet, dass** die Armaturen (40a-40f) relativ zum Korpus stufenlos höhenverstellbar sind.

6. Medienversorgungsvorrichtung (100) nach einem der vorhergehenden Ansprüche, **dadurch gekennzeichnet, dass** die Drehbeweglichkeit der Armaturen (40a-40f) in jeder Höhenlage möglich ist.

7. Medienversorgungsvorrichtung nach einem der vorhergehenden Ansprüche, **dadurch gekennzeichnet, dass** die Armaturen (40a-40f) in einem Gehäuse (20) aufgenommen sind, das mit dem Korpus (10) gekoppelt ist.

8. Medienversorgungsvorrichtung (100) nach Anspruch 7, **dadurch gekennzeichnet, dass** der Korpus (10) eine Vertiefung aufweist, in die das Gehäuse (20) zumindest teilweise aufnehmbar ist.

9. Medienversorgungsvorrichtung (100) nach einem der Ansprüche 7 und 8, **dadurch gekennzeichnet, dass** das Gehäuse (20) und der Korpus (10) durch eine Vielzahl von ringförmigen Elementen (30a) gekoppelt sind, wobei benachbarte ringförmige Elemente drehbeweglich miteinander verbunden sind.

10. Medienversorgungsvorrichtung (100) nach Anspruch 9, **dadurch gekennzeichnet, dass** die Drehbeweglichkeit benachbarter ringförmiger Elemente (30a) durch ein Kugel-Pfannen-Gelenk erreicht wird.

11. Medienversorgungsvorrichtung (100) nach einem der Ansprüche 9 und 10, **dadurch gekennzeichnet, dass** die Vielzahl von ringförmigen Elementen (30a) einen geschlossenen Mantel bildet.

12. Medienversorgungsvorrichtung (100) nach einem der Ansprüche 9 bis 11, **dadurch gekennzeichnet, dass** die Armaturen 40a-40f fluidmäßig und/oder elektrisch mit Labormedienleitungen (42) verbunden sind, welche innerhalb der Vielzahl von ringförmigen Elementen (30a) verlaufen.

13. Medienversorgungsvorrichtung (100) nach einem der Ansprüche 9 bis 12, **dadurch gekennzeichnet, dass** der Korpus (10) eine Öffnung (12) aufweist, durch die zumindest ein Teil der Vielzahl von ringförmigen Elementen (30a) bewegbar ist.

14. Medienversorgungsvorrichtung (100) nach einem der Ansprüche 9 bis 13, **dadurch gekennzeichnet, dass** in dem Korpus (10) eine Kette (50) aufgenommen ist, die an ein ringförmiges Element angeflanscht ist, und dass durch eine horizontale Bewegung der Kette (50) die Armaturen (40a-40f) in der Höhe verstellt werden.

15. Medienversorgungsvorrichtung (100) nach einem der vorhergehenden Ansprüche, des Weiteren umfassend einen Kraftaufnehmer, der eine auf die Armaturen (40a-40f) wirkende Kraft erfasst, wobei in dem Fall, dass die erfasste Kraft einen vorbestimmten Schwellenwert überschreitet, die Labormedienzufuhr zu den Armaturen 40a-40f unterbrochen wird.

16. Medienversorgungsvorrichtung (100) nach einem der vorhergehenden Ansprüche, **dadurch gekennzeichnet, dass** der Korpus (10) zur Anbringung an eine Raumdecke oder eine Raumwand ausgebildet ist.

17. Medienversorgungsvorrichtung (100) nach einem der vorhergehenden Ansprüche, **dadurch gekennzeichnet, dass** die Armaturen (40a-40f) mindestens zwei, vorzugsweise drei oder vier oder fünf oder sechs oder sieben oder acht oder neun oder zehn Labormedienarmaturen umfassen, die ausgewählt sind aus der Gruppe bestehend aus Gas-, Reinstgas-, Wasser-, Druckluft-, Strom-, EDV-, Multimedia-, Licht-, Vakuum und Abluftarmaturen.

## Claims

1. Media supply device (100) for the barrier-free, selective supply of at least one school or laboratory workstation with laboratory media, comprising a body (10) and a multiplicity of fittings (40a-40f) which are adjustable in terms of height relative to the body (10) and are coupled therewith for the supply and removal of laboratory and media, wherein the coupling between the fittings (40a-40f) and the body (10) is of such kind that the fittings (40a-40f) are able to rotate about at least one oblique axis of rotation deviating from a horizontal and vertical axis of rotation, wherein the fittings (40a-40f) are coupled to the body (10) under no tension.

2. Media supply device (100) according to Claim 1, **characterized in that** the fittings (40a-40f) can rotate about at least one horizontal, at least one vertical, and a multiplicity of oblique axes of rotation.

3. Media supply device (100) according to Claim 1 or 2, **characterized in that** the fittings (40a-40f) are movable in a manner resembling that of an elephant's trunk.

4. Media supply device (100) according to any one of the preceding claims, **characterized in that** the fittings (40a-40f) are adjustable in a multiplicity of predefined height points relative to the body (10).

5. Media supply device (100) according to any one of the preceding claims, **characterized in that** the height of the fittings (40a-40f) is infinitely variable relative to the body.

6. Media supply device (100) according to any one of the preceding claims, **characterized in that** the rotatability of the fittings (40a-40f) is possible at all height points.

7. Media supply device (100) according to any one of the preceding claims, **characterized in that** the fittings (40a-40f) are accommodated in a housing (20) which is coupled to the body (10).

8. Media supply device (100) according to Claim 7, **characterized in that** the body (10) has a recess in which at least a part of the housing (20) can be accommodated.

9. Media supply device (100) according to either of Claims 7 or 8, **characterized in that** the housing (20) and the body (10) are coupled via a multiplicity of annular elements (30a), wherein adjacent annular elements are connected rotatably with one another.

10. Media supply device (100) according to Claim 9, **characterized in that** the rotatability of adjacent annular elements (30a) is achieved by means of a ball and socket joint.

11. Media supply device (100) according to either of Claims 9 or 10, **characterized in that** the multiplicity of annular elements (30a) forms a closed sheath.

12. Media supply device (100) according to any one of Claims 9 to 11, **characterized in that** the fittings (40a-40f) are in fluid and/or electrical communication with laboratory media lines (42) which extend inside the multiplicity of annular elements (30a).

13. Media supply device (100) according to any one of Claims 9 to 12, **characterized in that** the body (10) has an opening (12) through which at least some of the multiplicity of annular elements (30a) is movable.

14. Media supply device (100) according to any one of Claims 9 to 13, **characterized in that** a chain (50) is accommodated in the body (10), and is flange-connected to an annular element, and **in that** the fittings (40a-40f) are adjusted in terms of height by means of a horizontal movement of the chain (50).

15. Media supply device according (100) to any one of the preceding claims, further comprising a force sensor, which detects a force acting on the fittings (40a-40f), wherein the supply of laboratory media to the fittings (40a-40f) is interrupted if the detected force exceeds a predetermined threshold value.

16. Media supply device (100) according to any one of the preceding claims, **characterized in that** the body (10) is designed to be attached to a room ceiling or room wall.

17. Media supply device (100) according to any one of the preceding claims, **characterized in that** the fittings (40a-40f) comprise at least two, preferably three or four or five or six or seven or eight or nine or ten laboratory media fittings which are selected from the group consisting of fittings for gas, high-purity gas, water, compressed air, electricity, EDP, multimedia, light, vacuum and exhaust air.

## Revendications

1. Dispositif d'alimentation de milieux (100), destiné à l'alimentation ponctuelle sans barrière en milieux laborantins d'au moins un poste de travail scolaire ou laborantin, qui comprend un corps (10) et une pluralité de robinetteries (40a à 40f) réglables en hauteur par rapport au corps (10) et accouplées sur celui-ci pour l'alimentation et l'évacuation de milieux laborantins, l'accouplement entre les robinetteries (40a à 40f) et le corps (10) étant tel que les robinetteries (40a à 40f) soient mobiles en rotation autour d'au moins un axe de rotation oblique, divergent d'un axe de rotation horizontal et vertical, les robinetteries (40a à 40f) étant accouplées sur le corps (10) en étant exemptes de traction.

2. Dispositif d'alimentation de milieux (100) selon la revendication 1, **caractérisé en ce que** les robinetteries (40a à 40f) sont mobiles en rotation autour d'au moins un axe de rotation horizontal, au moins un axe de rotation vertical et une pluralité d'axes de rotation obliques.

3. Dispositif d'alimentation de milieux (100) selon la revendication 1 ou 2, **caractérisé en ce que** les robinetteries (40a à 40f) sont mobiles à la manière d'un déplacement de Russel.

4. Dispositif d'alimentation de milieux (100) selon l'une quelconque des revendications précédentes, **caractérisé en ce que** les robinetteries (40a à 40f) sont réglables par rapport au corps (10) dans une pluralité de positions en hauteur prédéfinies.

5. Dispositif d'alimentation de milieux (100) selon l'une quelconque des revendications précédentes, **caractérisé en ce que** les robinetteries (40a à 40f) sont déplaçables en hauteur en continu par rapport au corps.

6. Dispositif d'alimentation de milieux (100) selon l'une quelconque des revendications précédentes, **caractérisé en ce que** la mobilité en rotation des robinetteries (40a à 40f) est possible dans chaque position en hauteur.

7. Dispositif d'alimentation de milieux (100) selon l'une quelconque des revendications précédentes, **caractérisé en ce que** les robinetteries (40a à 40 f) sont réceptionnées dans un boîtier (20) qui est accouplé avec le corps (10).

8. Dispositif d'alimentation de milieux (100) selon la revendication 7, **caractérisé en ce que** le corps (10) comporte un creux dans lequel le boîtier (20) peut être réceptionné au moins partiellement.

9. Dispositif d'alimentation de milieux (100) selon l'une quelconque des revendications 7 et 8, **caractérisé en ce que** le boîtier (20) et le corps (10) sont accouplés par une pluralité d'éléments (30a) de forme annulaire, des éléments de forme annulaire voisins étant reliés entre eux de manière mobile en rotation.

10. Dispositif d'alimentation de milieux (100) selon la revendication 9, **caractérisé en ce que** la mobilité en rotation d'éléments (30a) de forme annulaire voisins est obtenue par une articulation en boule et en creux.

11. Dispositif d'alimentation de milieux (100) selon l'une quelconque des revendications 9 et 10, **caractérisé en ce que** la pluralité d'éléments (30a) de forme annulaire forme une enveloppe fermée.

12. Dispositif d'alimentation de milieux (100) selon l'une quelconque des revendications 9 à 11, **caractérisé en ce que** les robinetteries (40a à 40f) sont reliées fluidiquement et/ou électriquement avec des conduits de milieux laborantins (42), lesquels s'écoulent à l'intérieur de la pluralité d'éléments (30a) de forme annulaire.

13. Dispositif d'alimentation de milieux (100) selon l'une quelconque des revendications 9 à 12, **caractérisé en ce que** le corps (10) comporte une ouverture (12) à travers laquelle au moins une partie de la pluralité d'éléments (30a) de forme annulaire est mobile.

14. Dispositif d'alimentation de milieux (100) selon l'une quelconque des revendications 9 à 13, **caractérisé en ce que** dans le corps (10) est réceptionnée une chaîne (50) qui est bridée sur un élément de forme annulaire, et **en ce que** par un déplacement horizontal de la chaîne (50), les robinetteries (40a à 40f) sont réglées en hauteur.

15. Dispositif d'alimentation de milieux (100) selon l'une quelconque des revendications précédentes, comprenant par ailleurs un capteur de force qui détecte une force agissant sur les robinetteries (40a à 40f), dans le cas où la force détectée dépasse une valeur seuil prédéfinie, l'amenage de milieux laborantins vers les robinetteries (40a à 40f) étant interrompu.

16. Dispositif d'alimentation de milieux (100) selon l'une quelconque des revendications précédentes, **caractérisé en ce que** le corps (10) est conçu pour être monté sur un plafond de pièce ou une paroi de pièce.

17. Dispositif d'alimentation de milieux (100) selon l'une quelconque des revendications précédentes, **caractérisé en ce que** les robinetteries (40a à 40f) comprennent au moins deux, de préférence trois ou quatre ou cinq ou six ou sept ou huit ou neuf ou dix robinetteries de milieux laborantins, qui sont sélectionnées dans le groupe comprenant les robinetteries de gaz, de gaz ultrapurs, d'eau, d'air comprimé, de courant électrique, d'informatique, de multimédias, de lumière, de vide ou d'air évacué.
